# EUROPÄISCHE PATENTSCHRIFT

(11) **EP 1 268 662 B1**
(45) Veröffentlichungstag und Bekanntmachung des Hinweises auf die Patenterteilung: **04.11.2020**
(21) Anmeldenummer: 01916984.6
(22) Anmeldetag: 12.02.2001
(51) Int. Cl.: C08L 51/04, C08L 55/02, C08F 279/02, C08F 279/04, C08L 25/12

(54) **POLYMERZUSAMMENSETZUNGEN MIT VERBESSERTER EIGENSCHAFTSKONSTANZ**
POLYMER COMPOSITIONS WITH IMPROVED PROPERTY CONSTANCY
COMPOSITIONS POLYMERES A CONSTANCE DE PROPRIETES AMELIOREE

(30) Priorität: 23.02.2000 DE 10008420
(43) Veröffentlichungstag der Anmeldung: 02.01.2003
(73) Patentinhaber: INEOS Styrolution Group GmbH, 60325 Frankfurt am Main (DE)
(72) Erfinder: EICHENAUER, Herbert, 41539 Dormagen (DE); SCHMIDT, Adolf, 74740 Adelsheim (DE); JANSEN, Ulrich, 41541 Dormagen (DE)
(74) Vertreter: Gille Hrabal
(86) Internationale Anmeldenummer: PCT/EP2001/001493
(87) Internationale Veröffentlichungsnummer: WO 2001/062848

(56) Entgegenhaltungen:
- EP-A- 0 436 381
- EP-A- 0 818 480
- EP-A- 0 845 496
- EP-A- 0 845 497
- US-A- 4 713 420
- US-A- 4 874 815
- US-A- 5 674 940
- US-A- 5 719 232
- US-A- 5 741 853

## Beschreibung

ABS-Formmassen bzw. Formmassen vom ABS-Typ werden schon seit vielen Jahren in großen Mengen als thermoplastische Harze für die Herstellung von Formteilen aller Art eingesetzt. Dabei kann das Eigenschaftsspektrum dieser Harze in weiten Bereichen variiert werden.

Als besonders wichtige Eigenschaften von ABS-Formmassen seien Zähigkeit (Schlagzähigkeit, Kerbschlagzähigkeit), E-Modul, Verarbeitbarkeit (MVR), Wärmeformbeständigkeit, Oberflächenglanz genannt, wobei es in Abhängigkeit vom Einsatzgebiet im allgemeinen auf definierte Eigenschaftskombinationen ankommt.

Ein besonders wichtiges Merkmal für den Verarbeiter von ABS-Formmassen stellt, insbesondere bei Nutzung vollautomatischer Fertigungsanlagen, die Konstanz von Eigenschaften oder Eigenschaftskombinationen der zu verarbeitenden Formmassen dar.

Zwar lassen sich durch Nutzung moderner Verfahren bei der ABS-Herstellung (z.B. Computersteuerung von Polymerisation und Compoundierung) Produkte mit relativ engen Toleranzgrenzen herstellen, trotzdem ist für spezielle Anwendungen eine nur über die Produktzusammensetzung bzw. den Produktaufbau erreichbare noch höhere Eigenschaftskonstanz notwendig. EP 0 845 496 A2 beschreibt thermoplastische Formmassen vom ABS-Typ enthaltend (I) mindestens ein Pfropfpolymerisat, welches erhältlich ist durch Emulsionspolymerisation von harzbildenden Monomeren in Gegenwart einer Mischung aus einem Butadienpolymerisatlatex (A) mit einem Teilchendurchmesser d50 <=320 nm, und einem Butadienpolymerisatlatex (B) mit einem Teilchendurchmesser d50 >=370 nm; (II) mindestens ein Pfropfpolymerisat, welches erhältlich ist durch Emulsionspolymerisation von harzbildenden Monomeren in Gegenwart eines Butadienpolymerisatlatex (C) mit einem Teilchendurchmesser d50 von 110 bis 150 nm; und (III) mindestens ein kautschukfreies Copolymerisat aus harzbildenden Monomeren sowie die Verwendung der Formmassen zur Herstellung von Formteilen.

Es bestand daher die Aufgabe, thermoplastische Formmassen vom ABS-Typ herzustellen, die auch bei Schwankungen der einzelnen Einsatzkomponenten für die wichtigsten Eigenschaften von Ansatz zu Ansatz sehr konstante Werte aufweisen. Die erfindungsgemäße Aufgabe wird gelöst durch Einsatz von Kombinationen spezieller Pfropfkautschukpolymerisate, bei deren Herstellung unter Verwendung von Saatlatexteilchen mit definierten Teilchendurchmessern durch Saatpolymerisation erhaltene Kautschuke mit definierten Teilchendurchmessern eingesetzt werden.

Gegenstand der Erfindung sind Polymerzusammensetzungen enthaltend
I) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (A) mit einem mittleren Teilchendurchmesser d₅₀ von 230 bis 330 nm, vorzugsweise von 240 bis 320 nm und besonders bevorzugt von 250 bis 310 nm,
II) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (B) mit einem mittleren Teilchendurchmesser d₅₀ von 340 bis 480 nm, vorzugsweise von 350 bis 470 nm und besonders bevorzugt von 360 bis 460 nm,
III) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (C) und
IV) mindestens ein kautschukfreies Copolymerisat aus Styrol und Acrylnitril im Gewichtsverhältnis 95:5 bis 50:50, wobei Styrol und/oder Acrylnitril ganz oder teilweise durch α-Methylstyrol, Methylmethacrylat oder N-Phenylmaleinimid oder Mischungen hieraus ersetzt werden kann,
dadurch gekennzeichnet, dass die Butadienpolymerisatlatices (A) und (B) erhalten werden durch Saatpolymerisation unter Verwendung von mindestens einem Butadienpolymerisatlatex (C) mit einem mittleren Teilchendurchmesser von 10 bis 220 nm, vorzugsweise von 20 bis 210 nm und besonders bevorzugt von 30 bis 200 nm als Saatlatex und die Pfropfkautschukkomponente III) erhalten wird durch Pfropfpolymerisation in Gegenwart mindestens eines für (A) und (B) als Saatlatex eingesetzten Butadienpolymerisatlatex (C).

Gegenstand der vorliegenden Erfindung ist weiterhin ein Verfahren zur Herstellung der erfindungsgemäßen Polymerzusammensetzungen, wobei die Butadienpolymerisatlatices (A) und (B) erhalten werden durch Saatpolymerisation unter Verwendung von mindestens einem Butadienpolymerisatlatex (C) mit einem mittleren Teilchendurchmesser von 10 bis 220 nm als Saatlatex und die Pfropfkautschukkomponente III) erhalten wird durch Pfropfpolymerisation in Gegenwart mindestens eines für (A) und (B) als Saatlatex eingesetzten Butadienpolymerisatlatex (C).

Im allgemeinen können die erfindungsgemäßen Polymerzusammensetzungen die Pfropfkautschukkomponenten (I) und (II) und (III) in beliebigen Anteilen enthalten, bevorzugt in Anteilen von 1 bis 60 Gew.-Teilen, besonders bevorzugt in Anteilen von 5 bis 50 Gew.-Teilen, und die kautschukfreie Harzkomponente (IV) bevorzugt in Anteilen von 40 bis 99 Gew.-Teilen, besonders bevorzugt in Anteilen von 50 bis 95 Gew.-Teilen.

Das Gewichtsverhältnis (I):(II):(III) kann in weiten Grenzen variiert werden; üblicherweise beträgt das Gewichtsverhältnis (I):(II) 90:10 bis 10:90, vorzugsweise 80:20 bis 20:80 und besonders bevorzugt 70:30 bis 35:65 und das Gewichtsverhältnis [(I)+(II)]:(III) 10:90 bis 80:20, vorzugsweise 20:80 bis 70:30 und besonders bevorzugt 25:75 bis 65:35.

Außer den genannten Polymerkomponenten können die erfindungsgemäßen Polymerzusammensetzungen weitere kautschukfreie nicht aus Vinylmonomeren aufgebaute Thermoplastharze enthalten, wobei man diese Thermoplastharze in Mengen bis zu 1000 Gew.-Teilen, vorzugsweise bis zu 700 Gew.-Teilen und besonders bevorzugt bis zu 500 Gew.-Teilen (jeweils bezogen auf 100 Gew.-Teile I + II + III + IV) verwendet.

Die Butadienpolymerisatlatices (A), (B) und (C) werden durch Emulsionspolymerisation von Butadien nach der sogenannten Saatpolymerisationstechnik hergestellt, bei der zunächst ein feinteiliges Polymerisat, vorzugsweise ein Butadienpolymerisat, als Saatlatex hergestellt und dann durch Weiterumsatz mit Butadien enthaltenden Monomeren zu größeren Teilchen weiterpolymerisiert wird (siehe z.B. in Houben-Weyl, Methoden der Organischen Chemie, Makromolekulare Stoffe Teil 1, S. 339 (1961), Thieme Verlag Stuttgart). Dabei wird vorzugsweise unter Verwendung des Saat-Batch-Verfahrens oder Verwendung des Saat-Zulauf-Verfahrens gearbeitet.

Als Comonomere können bis zu 50 Gew.-% (bezogen auf die gesamte zur Butadienpolymerisatherstellung eingesetzte Monomermenge) eines oder mehrerer mit Butadien copolymerisierbarer Monomerer eingesetzt werden.

Beispiele für solche Monomere sind Isopren, Chloropren, Acrylnitril, Styrol, α-Methylstyrol, C₁-C₄-Alkylstyrole, C₁-C₈-Alkylacrylate, C₁-C₈-Alkylmethacrylate, Alkylenglykoldiacrylate, Alkylenglykoldimethacrylate, Divinylbenzol; vorzugsweise wird Butadien alleine oder in Abmischung mit bis zu 20 Gew.-%, vorzugsweise mit bis zu 10 Gew.-% Styrol und/oder Acrylnitril eingesetzt.

Als Saatlatexpolymere werden vorzugsweise Butadienpolymerisate wie z.B. Polybutadien, Butadien / Styrol - Copolymerisate, Butadien / Acrylnitril - Copolymerisate oder Polymerisate aus den oben genannten Monomeren eingesetzt.

Im Prinzip können auch andere feinteilige Latexpolymere wie z.B. Polystyrol oder Styrolcopolymerisate, Polymethylmethacrylat oder Methylmethacrylatcopolymere sowie Polymerisate anderer Vinylmonomerer verwendet werden.

Bevorzugte Saatlatexpolymere sind Polybutadienlatices.

Dabei werden bei der Herstellung des Butadienpolymerisatlatex (A) und des Butadienpolymerisatlatex (B) Saatlatices (C) mit einem mittleren Teilchendurchmesser d₅₀ von 10 bis 220 nm, vorzugsweise 20 bis 210 nm und besonders bevorzugt 30 bis 200 nm eingesetzt.

Bei Verwendung von Saatlatices (C) mit mittleren Teilchendurchmessern d₅₀ oberhalb 80 nm, vorzugsweise oberhalb 90 nm und besonders bevorzugt oberhalb 100 nm werden auch die Saatlatices (C) selbst vorzugsweise durch Saatpolymerisation hergestellt. Dazu werden vorzugsweise Saatlatices (D) mit mittleren Teilchendurchmessem d₅₀ von 10 bis 60 nm, vorzugsweise 20 bis 50 nm, eingesetzt.

Der Butadienpolymerisatlatex (A) besitzt einen mittleren Teilchendurchmesser d₅₀ von 230 bis 330 nm, vorzugsweise von 240 bis 320 nm und besonders bevorzugt von 250 bis 310 nm.

Der Gelgehalt von (A) beträgt 30 bis 80 Gew.-%, vorzugsweise 40 bis 75 Gew.-% und besonders bevorzugt 45 bis 70 Gew.-%.

Der Butadienpolymerisatlatex (B) besitzt einen mittleren Teilchendurchmesser d₅₀ von 340 bis 480 nm, vorzugsweise von 350 bis 470 nm und besonders bevorzugt von 360 bis 460 nm.

Der Gelgehalt von (B) beträgt 50 bis 95 Gew.-%, vorzugsweise 55 bis 90 Gew.-% und besonders bevorzugt 60 bis 85 Gew.-%.

Der Butadienpolymerisatlatex (C) besitzt einen mittleren Teilchendurchmesser d₅₀ von 10 bis 220 nm, vorzugsweise von 20 bis 210 nm und besonders bevorzugt von 30 bis 200 nm.

Der Gelgehalt von (C) beträgt 30 bis 98 Gew.-%, vorzugsweise 40 bis 95 Gew.-% und besonders bevorzugt 50 bis 92 Gew.-%.

Der Saatlatex (D), vorzugsweise ein Butadienpolymerisatlatex, besitzt einen mittleren Teilchendurchmesser d₅₀ von 10 bis 60 nm, vorzugsweise 20 bis 50 nm.

Der Gelgehalt von (D) beträgt 10 bis 95 Gew.-%, vorzugsweise 20 bis 90 Gew.-% und besonders bevorzugt 30 bis 85 Gew.-%.

Die Bestimmung des mittleren Teilchendurchmessers d₅₀ kann durch Ultrazentrifugenmessung ermittelt werden (vgl. W. Scholtan, H.Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Butadienpolymerisatlatices (A), (B), (C) und (D) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgator können übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von C₁₀-C₁₈-Fettsäuren, disproportionierte Abietinsäure, Emulgatoren gemäß DE-OS 36 39 904 und DE-OS 39 13 509) eingesetzt.

Die Herstellung der Pfropfkautschukpolymerisate (I), (II) und (III) kann beliebig durch separate Pfropfung der Butadienpolymerisatlatices (A), (B) und (C) in getrennten Reaktionen oder durch gemeinsame Pfropfung beliebiger Mischungen ausgewählt aus den Butadienpolymerisatlatices (A), (B) und (C) während einer Reaktion oder zweier Reaktionen oder dreier Reaktionen durchgeführt werden.

Dabei können die Pfropfpolymerisation(en) nach beliebigen Verfahren durchgeführt werden, vorzugsweise wird bzw. werden sie so durchgeführt, dass das Monomergemisch kontinuierlich zum Butadienpolymerisatlatex (A) bzw. zum Butadienpolymerisatlatex (B) bzw. zum Butadienpolymerisatlatex (C) bzw. zu beliebigen Gemischen ausgewählt aus den Butadienpolymerisatlatices (A), (B) und (C) gegeben und polymerisiert wird.

Dabei werden bevorzugt spezielle Monomer-/Kautschuk-Verhältnisse eingehalten und die Monomeren in einer bekannten Weise zum Kautschuk gegeben.

Zur Erzeugung der erfindungsgemäßen Komponenten (I), (II) und (III) werden vorzugsweise 15 bis 50 Gew.-Teile, besonders bevorzugt 20 bis 40 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 50 bis 85 Gew.-Teilen, besonders bevorzugt 60 bis 80 Gew.-Teilen (jeweils bezogen auf Feststoff) des Butadienpolymerisatlatex (A) bzw. des Butadienpolymerisatlatex (B) bzw. des Butadienpolymerisatlatex (C) bzw. beliebiger Gemische ausgewählt aus den Butadienpolymerisatlatices (A), (B) und (C) polymerisiert.

Die bei der Pfropfpolymerisation eingesetzten Monomeren sind vorzugsweise Mischungen aus Styrol und Acrylnitril im Gew.-Verhältnis 95:5 bis 50:50, besonders bevorzugt im Gew.-Verhältnis 80:20 bis 65:35, wobei Styrol und/oder Acrylnitril ganz oder teilweise durch copolymerisierbare Monomere, vorzugsweise durch α-Methylstyrol, Methylmethacrylat oder N-Phenylmaleinimid ersetzt werden können. Prinzipiell können zusätzlich beliebige weitere copolymerisierbare Vinylmonomere in Mengen bis ca. 10 Gew.-% (bezogen auf Gesamtmenge der Monomeren) mitverwendet werden.

Zusätzlich können bei der Pfropfpolymerisation Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf Gesamtmonomermenge in der Pfropfpolymerisationstufe).

Geeignete Molekulargewichtsregler sind beispielsweise Alkylmercaptane wie n-Dodecylmercaptan, t-Dodecylmercaptan; dimeres α-Methylstyrol; Terpinolen.

Als Initiatoren kommen anorganische und organische Peroxide, z.B. H₂O₂, Di-tert.-Butylperoxid, Cumolhydroperoxid, Dicyclohexylpercarbonat, tert.-Butylhydroperoxid, p-Menthanhydroperoxid, Azoinitiatoren wie Azobisisobutyronitril, anorganische Persalze wie Ammonium-, Natrium- oder Kaliumpersulfat, Kaliumperphosphat, Natriumperborat sowie Redox-Systeme in Betracht. Redox-Systeme bestehen in der Regel aus einem organischen Oxidationsmittel und einem Reduktionsmittel, wobei im Reaktionsmedium zusätzlich Schwermetallionen vorhanden sein können (siehe Houben-Weyl, Methoden der Organischen Chemie, Band 14/1, S. 263 bis 297).

Die Polymerisationstemperatur beträgt im allgemeinen 25°C bis 160°C, vorzugsweise 40°C bis 90°C. Geeignete Emulgatoren sind oben angegeben.

Dabei kann nach üblicher Temperaturführung, z.B. isotherm, gearbeitet werden; vorzugsweise wird die Pfropfpolymerisation jedoch so durchgeführt, dass der Temperaturunterschied zwischen Beginn und Ende der Reaktion mindestens 10°C, vorzugsweise mindestens 15°C und besonders bevorzugt mindestens 20°C beträgt.

Zur Erzeugung der erfindungsgemäßen Komponenten I), II) und III) kann die Pfropfpolymerisation vorzugsweise durch Monomerenzulauf derart durchgeführt werden, dass innerhalb der ersten Hälfte der Gesamtmonomerenzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Als kautschukfreie Copolymerisate IV) werden vorzugsweise Copolymerisate des Styrols und Acrylnitrils im Gewichtsverhältnis 95:5 bis 50:50 verwendet, wobei Styrol und/oder Acrylnitril ganz oder teilweise durch α-Methylstyrol, Methylmethacrylat oder N-Phenylmaleinimid ersetzt werden kann.

Besonders bevorzugt sind Copolymerisate IV) mit Anteilen an eingebauten Acrylnitril-Einheiten <30 Gew.-%.

Diese Copolymerisate besitzen vorzugsweise mittlere Molekulargewichte M̅_{w} von 20 000 bis 200 000 bzw. Grenzviskositäten [η] von 20 bis 110 ml/g (gemessen in Dimethylformamid bei 25°C).

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt. Die Copolymerisate können allein oder in beliebiger Mischung zugesetzt werden.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreies Copolymerisat in den erfindungsgemäßen Formmassen möglich.

Geeignete thermoplastische Polycarbonate und Polyestercarbonate sind bekannt (vgl. z.B. DE-A 1 495 626, DE-A 2 232 877, DE-A 2 703 376, DE-A 2 714 544, DE-A 3 000 610, DE-A 3 832 396, DE-A 3 077 934), z.B. herstellbar durch Umsetzung von Diphenolen der Formeln (V) und (VI) 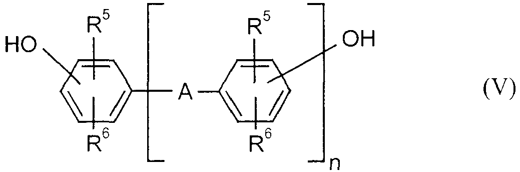 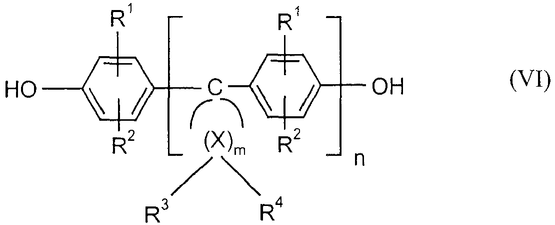 worin
- A: eine Einfachbindung, C₁-C₅-Alkylen, C₂-C₅-Alkyliden, C₅-C₆-Cycloalkyl-iden, -O-, -S-, -SO-, -SO₂- oder -CO- ist,
- R⁵ und R⁶: unabhängig voneinander für Wasserstoff, Methyl oder Halogen, insbe-sondere für Wasserstoff, Methyl, Chlor oder Brom stehen,
- R¹ und R²: unabhängig voneinander Wasserstoff, Halogen bevorzugt Chlor oder Brom, C₁-C₈-Alkyl, bevorzugt Methyl, Ethyl, C₅-C₆-Cycloalkyl, bevorzugt Cyclohexyl, C₆-C₁₀-Aryl, bevorzugt Phenyl, oder C₇-C₁₂-Aralkyl, bevor-zugt Phenyl-C₁-C₄-alkyl, insbesondere Benzyl, bedeuten,
- m: eine ganze Zahl von 4 bis 7, bevorzugt 4 oder 5 ist,
- n: 0 oder 1 ist,
- R³ und R⁴: für jedes X individuell wählbar sind und unabhängig voneinander Was-serstoff oder C₁-C₆-Alkyl bedeuten und
- X: Kohlenstoff bedeutet,
mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (V) und (VI) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (V) sind 2,2-Bis-(4-hydroxyphenyl)-propan und 1,1-Bis-(4-hydroxyphenyl)-cyclohexan, bevorzugtes Phenol der Formel (VI) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-A 2 842 005, Monoalkylphenole, Dialkylphenole mit insgesamt 8 bis 20 C-Atomen in den Alkylsubstituenten gemäß DE-A 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (V) und (VI).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte (M̅_{w}, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxy-ethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Bevorzugte erfindungsgemäße Formmassen enthalten 1 bis 60 Gew.-Teile, vorzugsweise 5 bis 50 Gew.-Teile Pfropfpolymerkomponenten I), II) und III) und 40 bis 99 Gew.-Teile, vorzugsweise 50 bis 95 Gew.-Teile kautschukfreies Copolymerisat.

Die Herstellung der erfindungsgemäßen Formmassen erfolgt durch Vermischen der Komponenten I), II) und III) und IV) auf üblichen Mischaggregaten (vorzugsweise auf Mehrwalzenstühlen, Mischextrudern oder Innenknetern).

Gegenstand der Erfindung ist daher weiterhin ein Verfahren zur Herstellung der erfindungsgemäßen Formmassen, wobei man die Komponenten I), II) und III) und IV) vermischt und bei erhöhter Temperatur, im allgemeinen bei Temperaturen von 150°C bis 300°C, compoundiert und extrudiert.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gew.-%, wenn nicht anders angegeben.

### Beispiele:

### Komponenten

### ABS-Pfropfpolymerisat 1 (erfindungsgemäß)

29 Gew.-Teile (gerechnet als Feststoff) eines unter Verwendung eines Polybutadiensaatlatex mit einem mittleren Teilchendurchmesser d₅₀ von 118 nm durch radikalische Saatpolymerisation hergestellten anionisch emulgierten Polybutadienlatex mit einem mittleren Teilchendurchmesser d₅₀ von 289 nm und einem Gelgehalt von 66 Gew.-% und 29 Gew.-Teile (gerechnet als Feststoff) eines unter Verwendung eines Polybutadiensaatlatex mit einem mittleren Teilchendurchmesser d₅₀ von 137 nm durch radikalische Saatpolymerisation hergestellten anionisch emulgierten Polybutadienlatex mit einem mittleren Teilchendurchmesser d₅₀ von 399 nm und einem Gelgehalt von 80 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 42 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert; parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolvmerisat 2 (erfindungsgemäß)

29 Gew.-Teile (gerechnet als Feststoff) eines unter Verwendung eines Polybutadiensaatlatex mit einem mittleren Teilchendurchmesser d₅₀ von 118 nm durch radikalische Saatpolymerisation hergestellten anionisch emulgierten Polybutadienlatex mit einem mittleren Teilchendurchmesser d₅₀ von 289 nm und einem Gelgehalt von 66 Gew.-% und 29 Gew.-Teile (gerechnet als Feststoff) eines unter Verwendung eines Polybutadiensaatlatex mit einem mittleren Teilchendurchmesser d₅₀ von 118 nm durch radikalische Saatpolymerisation hergestellten anionisch emulgierten Polybutadienlatex mit einem mittleren Teilchendurchmesser d₅₀ von 410 nm und einem Gelgehalt von 85 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 42 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert; parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolymerisat 3 (erfindungsgemäß)

29 Gew.-Teile (gerechnet als Feststoff) eines unter Verwendung eines Polybutadiensaatlatex mit einem mittleren Teilchendurchmesser d₅₀ von 118 nm durch radikalische Saatpolymerisation hergestellten anionisch emulgierten Polybutadienlatex mit einem mittleren Teilchendurchmesser d₅₀ von 289 nm und einem Gelgehalt von 66 Gew.-% und 29 Gew.-Teile (gerechnet als Feststoff) eines unter Verwendung eines Polybutadiensaatlatex mit einem mittleren Teilchendurchmesser d₅₀ von 137 nm durch radikalische Saatpolymerisation hergestellten anionisch emulgierten Polybutadienlatex mit einem mittleren Teilchendurchmesser d₅₀ von 456 nm und einem Gelgehalt von 76 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 42 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert; parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolymerisat 4 (erfindungsgemäß)

29 Gew.-Teile (gerechnet als Feststoff) eines unter Verwendung eines Polybutadiensaatlatex mit einem mittleren Teilchendurchmesser d₅₀ von 118 nm durch radikalische Saatpolymerisation hergestellten anionisch emulgierten Polybutadienlatex mit einem mittleren Teilchendurchmesser d₅₀ von 289 nm und einem Gelgehalt von 66 Gew.-% und 29 Gew.-Teile (gerechnet als Feststoff) eines unter Verwendung eines Polybutadiensaatlatex mit einem mittleren Teilchendurchmesser d₅₀ von 137 nm durch radikalische Saatpolymerisation hergestellten anionisch emulgierten Polybutadienlatex mit einem mittleren Teilchendurchmesser d₅₀ von 445 nm und einem Gelgehalt von 84 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 42 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert; parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolymerisat 5 (Vergleich)

Die Vorschrift "ABS-Pfropfpolymerisat 1" wird wiederholt, wobei ein Gemisch aus Polybutadienlatices, die jeweils ohne Verwendung von Saatlatex hergestellt werden, eingesetzt wird (29 Gew.-Teile Polybutadienlatex (gerechnet als Feststoff) mit einem mittleren Teilchendurchmesser d₅₀ von 299 nm und einem Gelgehalt von 70 Gew.-% und 29 Gew.-Teile Polybutadienlatex (gerechnet als Feststoff) mit einem mittleren Teilchendurchmesser d₅₀ von 391 nm und einem Gelgehalt von 80 Gew.-%).

### ABS-Pfropfpolymerisat 6 (Vergleich)

Die Vorschrift "ABS-Pfropfpolymerisat 2" wird wiederholt, wobei ein Gemisch aus Polybutadienlatices, die jeweils ohne Verwendung von Saatlatex hergestellt werden, eingesetzt wird (29 Gew.-Teile Polybutadienlatex (gerechnet als Feststoff) mit einem mittleren Teilchendurchmesser d₅₀ von 299 nm und einem Gelgehalt von 70 Gew.-% und 29 Gew.-Teile Polybutadienlatex (gerechnet als Feststoff) mit einem mittleren Teilchendurchmesser d₅₀ von 416 nm und einem Gelgehalt von 87 Gew.-%).

### ABS-Pfropfpolymerisat 7 (Vergleich)

Die Vorschrift "ABS-Pfropfpolymerisat 3" wird wiederholt, wobei ein Gemisch aus Polybutadienlatices, die jeweils ohne Verwendung von Saatlatex hergestellt werden, eingesetzt wird (29 Gew.-Teile Polybutadienlatex (gerechnet als Feststoff) mit einem mittleren Teilchendurchmesser d₅₀ von 282 nm und einem Gelgehalt von 49 Gew.-% und 29 Gew.-Teile Polybutadienlatex (gerechnet als Feststoff) mit einem mittleren Teilchendurchmesser d₅₀ von 432 nm und einem Gelgehalt von 81 Gew.-%).

### ABS-Pfropfpolymerisat 8 (erfindungsgemäß)

29 Gew.-Teile (gerechnet als Feststoff) eines unter Verwendung eines Polybutadiensaatlatex mit einem mittleren Teilchendurchmesser d₅₀ von 111 nm durch radikalische Saatpolymerisation hergestellten anionisch emulgierten Polybutadienlatex mit einem mittleren Teilchendurchmesser d₅₀ von 305 nm und einem Gelgehalt von 55 Gew.-% und 29 Gew.-Teile (gerechnet als Feststoff) eines unter Verwendung eines Polybutadiensaatlatex mit einem mittleren Teilchendurchmesser d₅₀ von 137 nm durch radikalische Saatpolymerisation hergestellten anionisch emulgierten Polybutadienlatex mit einem mittleren Teilchendurchmesser d₅₀ von 404 nm und einem Gelgehalt von 81 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 42 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert; parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolymerisat 9 (erfindungsgemäß)

29 Gew.-Teile (gerechnet als Feststoff) eines unter Verwendung eines Polybutadiensaatlatex mit einem mittleren Teilchendurchmesser d₅₀ von 111 nm durch radikalische Saatpolymerisation hergestellten anionisch emulgierten Polybutadienlatex mit einem mittleren Teilchendurchmesser d₅₀ von 305 nm und einem Gelgehalt von 55 Gew.-% und 29 Gew.-Teile (gerechnet als Feststoff) eines unter Verwendung eines Polybutadiensaatlatex mit einem mittleren Teilchendurchmesser d₅₀ von 137 nm durch radikalische Saatpolymerisation hergestellten anionisch emulgierten Polybutadienlatex mit einem mittleren Teilchendurchmesser d₅₀ von 405 nm und einem Gelgehalt von 75 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 42 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert; parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolymerisat 10 (erfindungsgemäß)

29 Gew.-Teile (gerechnet als Feststoff) eines unter Verwendung eines Polybutadiensaatlatex mit einem mittleren Teilchendurchmesser d₅₀ von 111 nm durch radikalische Saatpolymerisation hergestellten anionisch emulgierten Polybutadienlatex mit einem mittleren Teilchendurchmesser d₅₀ von 305 nm und einem Gelgehalt von 55 Gew.-% und 29 Gew.-Teile (gerechnet als Feststoff) eines unter Verwendung eines Polybutadiensaatlatex mit einem mittleren Teilchendurchmesser d₅₀ von 137 nm durch radikalische Saatpolymerisation hergestellten anionisch emulgierten Polybutadienlatex mit einem mittleren Teilchendurchmesser d₅₀ von 412 nm und einem Gelgehalt von 84 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 42 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmäßig zudosiert; parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### ABS-Pfropfpolymerisat 11 (erfindungsgemäß)

50 Gew.-Teile (gerechnet als Feststoff) eines unter Verwendung eines Polybutadiensaatlatex mit einem mittleren Teilchendurchmesser d₅₀ von 48 nm durch radikalische Saatpolymerisation hergestellten anionisch emulgierten Polybutadienlatex mit einem mittleren Teilchendurchmesser d₅₀ von 137 nm und einem Gelgehalt von 88 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 50 Gew.-Teile eines Gemisches aus 73 Gew.-% Styrol. 27 Gew.-% Acrylnitril und 0,15 Gew.-Teile tert.-Dodecylmercaptan innerhalb 6 Stunden gleichmäßig zudosiert, parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### Harzkomponente 1

Statistisches Styrol / Acrylnitril - Copolymerisat (Styrol : Acrylnitril - Gewichtsverhältnis 72 : 28) mit einem M̅_{w} von ca. 115.000 und M̅_{w} / M̅ₙ -1 ≤ 2 erhalten durch radikalische Lösungspolymerisation.

### Harzkomponente 2

Statistisches Styrol / Acrylnitril - Copolymerisat (Styrol : Acrylnitril - Gewichtsverhältnis 72 : 28) mit einem M̅_{w} von ca. 85.000 und M̅_{w} / M̅ₙ -1 ≤ 2 erhalten durch radikalische Lösungspolymerisation.

### Formmassen

Die oben beschriebenen Polymerkomponenten werden in den in Tabelle 1 angegebenen Anteilen, 2 Gew.-Teilen Ethylendiaminbisstearylamid und 0,1 Gew.-Teilen eines Silikonöls in einem Innenkneter vermischt und nach Granulierung zu Prüfstäben verarbeitet.

Folgende Daten werden ermittelt:
Kerbschlagzähigkeit bei Raumtemperatur (aₖ^{RT}) und bei -40°C (aₖ^{-40°C}) nach ISO 180/1A (Einheit: kJ/m²), Kugeldruckhärte (Hc) nach DIN 53 456 (Einheit: N/mm²) und thermoplastische Fließfähigkeit (MVI) nach DIN 53 735 U (Einheit: cm³/10 min).

Aus den Beispielen (Prüfdaten siehe Tabelle 2) ist ersichtlich, dass die erfindungsgemäßen Produkte sehr enge Schwankungsbreiten der wichtigsten Eigenschaften (insbesondere Zähigkeit und Verarbeitbarkeit) aufweisen.

Zwar zeigen die Vergleichsprodukte ähnliche Absolutwerte für die geprüften Eigenschaften, die Schwankungsbreiten sind jedoch viel größer.

**Tabelle 1: Zusammensetzungen der Formmassen**

| Beispiel | ABS-Pfropfpolymerisat | | | | | | | | | | | Harzkomponente | |
|---|---|---|---|---|---|---|---|---|---|---|---|---|---|
| | 1 (Gew.-Teile) | 2 (Gew.-Teile) | 3 (Gew.-Teile) | 4 (Gew.-Teile) | 5 (Gew. - Teile) | 6 (Gew. - Teile) | 7 (Gew.-Teile) | 8 (Gew.-Teile) | 9 (Gew.-Teile) | 10 (Gew.-Teile) | 11 (Gew.-Teile) | 1 (Gew.-Teile) | 2 (Gew. - Teile) |
| 1 | 40 | -- | -- | -- | -- | -- | -- | -- | -- | -- | -- | 60 | -- |
| 2 | -- | 40 | -- | -- | -- | -- | -- | -- | -- | -- | -- | 60 | -- |
| 3 | -- | -- | 40 | -- | -- | -- | -- | -- | -- | -- | -- | 60 | -- |
| 4 | -- | -- | -- | 40 | -- | -- | -- | -- | -- | -- | -- | 60 | -- |
| 5 (Vergleich) | -- | -- | -- | -- | 40 | -- | -- | -- | -- | -- | -- | 60 | -- |
| 6 (Vergleich) | -- | -- | -- | -- | -- | 40 | -- | -- | -- | -- | -- | 60 | -- |
| 7 (Vergleich) | -- | -- | -- | -- | -- | -- | 40 | -- | -- | -- | -- | 60 | -- |
| 8 | -- | -- | -- | -- | -- | -- | -- | 15 | -- | -- | 15 | -- | 70 |
| 9 | -- | -- | -- | -- | -- | -- | -- | -- | 15 | -- | 15 | -- | 70 |
| 10 | -- | -- | -- | -- | -- | -- | -- | -- | -- | 15 | 15 | -- | 70 |

**Tabelle 2: Prüfdaten der Formmassen**

| Beispiel | aₖ^{RT} (kJ/m²) | aₖ^{-40°C} (kJ/m²) | Hc (N/mm²) | MVI (cm³/10min) |
|---|---|---|---|---|
| 1 | 31,2 | 21,3 | 81 | 9,6 |
| 2 | 30,7 | 21,3 | 81 | 9,6 |
| 3 | 31,1 | 21,3 | 80 | 9,4 |
| 4 | 30,9 | 21,7 | 81 | 9,3 |
| 5 (Vergleich) | 31,1 | 19,9 | 81 | 7,5 |
| 6 (Vergleich) | 29,1 | 17,9 | 84 | 8,7 |
| 7 (Vergleich) | 33,4 | 15,3 | 88 | 9,2 |
| 8 | 17,5 | 8,6 | 114 | 33,4 |
| 9 | 16,9 | 8,9 | 114 | 33,9 |
| 10 | 17,0 | 9,2 | 113 | 33,7 |

## Patentansprüche

1. Polymerzusammensetzungen enthaltend
I) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (A) mit einem mittleren Teilchendurchmesser d₅₀ von 230 bis 330 nm,
II) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (B) mit einem mittleren Teilchendurchmesser d₅₀ von 340 bis 480 nm,
III) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (C) mit einem mittleren Teilchendurchmesser von 10 - 220 nm und
IV) mindestens ein kautschukfreies Copolymerisat aus Styrol und Acrylnitril im Gewichtsverhältnis 95:5 bis 50:50, wobei Styrol und/oder Acrylnitril ganz oder teilweise durch α-Methylstyrol, Methylmethacrylat oder N-Phenylmaleinimid oder Mischungen hieraus ersetzt werden kann,
**dadurch gekennzeichnet, dass** die Butadienpolymerisatlatices (A) und (B) erhalten wurden durch Saatpolymerisation unter Verwendung von mindestens einem Butadienpolymerisatlatex (C) mit einem mittleren Teilchendurchmesser von 10 bis 220 nm als Saatlatex und die Pfropfkautschukkomponente III) erhalten wurde durch Pfropfpolymerisation in Gegenwart mindestens eines für (A) und (B) als Saatlatex eingesetzten Butadienpolymerisatlatex (C).

2. Polymerzusammensetzungen gemäß Anspruch 1 enthaltend
I) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (A) mit einem mittleren Teilchendurchmesser d₅₀ von 240 bis 320 nm,
II) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (B) mit einem mittleren Teilchendurchmesser d₅₀ von 350 bis 470 nm,
III) mindestens ein Pfropfkautschukpolymerisat erhalten durch Emulsionspolymerisation von Styrol und Acrylnitril im Gewichtsverhältnis 95:5 bis 50:50, wobei Styrol und/oder Acrylnitril ganz oder teilweise ersetzt werden kann durch α-Methylstyrol, Methylmethacrylat oder N-Phenylmaleinimid oder Mischungen hieraus, in Gegenwart eines Butadienpolymerisatlatex (C) und
IV) mindestens ein kautschukfreies Copolymerisat aus Styrol und Acrylnitril im Gewichtsverhältnis 95:5 bis 50:50, wobei Styrol und/oder Acrylnitril ganz oder teilweise durch α-Methylstyrol, Methylmethacrylat oder N-Phenylmaleinimid oder Mischungen hieraus ersetzt werden kann,
**dadurch gekennzeichnet, dass** die Butadienpolymerisatlatices (A) und (B) erhalten wurden durch Saatpolymerisation unter Verwendung von mindestens einem Butadienpolymerisatlatex (C) mit einem mittleren Teilchendurchmesser von 20 bis 210 nm als Saatlatex und die Pfropfkautschukkomponente III) erhalten wurde durch Pfropfpolymerisation in Gegenwart mindestens eines für (A) und (B) als Saatlatex eingesetzten Butadienpolymerisatlatex (C).

3. Polymerzusammensetzungen gemäß den Ansprüchen 1 und 2 enthaltend zusätzlich mindestens ein Harz ausgewählt aus aromatischem Polycarbonat, aromatischem Polyestercarbonat, Polyester, Polyamid oder Mischungen daraus.

4. Polymerzusammensetzungen gemäß den Ansprüchen 1 bis 3, **dadurch gekennzeichnet, dass** bei der Erzeugung der Pfropfkautschukpolymerisate der Monomerenzulauf derart durchgeführt wird, dass innerhalb der ersten Hälfte der Gesamtmonomerzudosierzeit 55 bis 90 Gew.-% der gesamten bei der Pfropfpolymerisation einzusetzenden Monomeren zudosiert werden und der verbleibende Monomeranteil innerhalb der zweiten Hälfte der Gesamtmonomerzudosierzeit zudosiert wird.

5. Polymerzusammensetzungen gemäß den Ansprüchen 1 bis 3, **dadurch gekennzeichnet, dass** bei der Erzeugung der Pfropfkautschukpolymerisate der Temperaturunterschied zwischen Beginn und Ende der Pfropfreaktion mindestens 15°C beträgt.

6. Verfahren zur Herstellung der Polymerzusammensetzungen gemäß den Ansprüchen 1 bis 5, wobei die Butadienpolymerisatlatices (A) und (B) erhalten werden durch Saatpolymerisation unter Verwendung von mindestens einem Butadienpolymerisatlatex (C) mit einem mittleren Teilchendurchmesser von 10 bis 220 nm als Saatlatex und die Pfropfkautschukkomponente III) erhalten wird durch Pfropfpolymerisation in Gegenwart mindestens eines für (A) und (B) als Saatlatex eingesetzten Butadienpolymerisatlatex (C).

7. Verfahren zur Herstellung von Polymerzusammensetzungen gemäß den Ansprüchen 1 bis 3, **dadurch gekennzeichnet, dass** man die Komponenten I), II), III) und IV) vermischt und bei erhöhter Temperatur compoundiert und extrudiert.

8. Verwendung der Polymerzusammensetzungen gemäß den Ansprüchen 1 bis 5 zur Herstellung von Formteilen.

9. Formteile erhältlich aus Polymerzusammensetzungen gemäß Ansprüchen 1 bis 5.

## Claims

1. Polymer compositions containing
I) at least one graft rubber polymer obtained by emulsion polymerization of styrene and acrylonitrile in the weight ratio 95:5 to 50:50, wherein styrene and/or acrylonitrile may be wholly or partly replaced by α-methylstyrene, methyl methacrylate or N-phenylmaleimide or mixtures thereof, in the presence of a butadiene polymer latex (A) having an average particle diameter dso from 230 to 330 nm,
II) at least one graft rubber polymer obtained by emulsion polymerization of styrene and acrylonitrile in the weight ratio 95:5 to 50:50, wherein styrene and/or acrylonitrile may be wholly or partly replaced by α-methylstyrene, methyl methacrylate or N-phenylmaleimide or mixtures thereof, in the presence of a butadiene polymer latex (B) having an average particle diameter d₅₀ from 340 to 480 nm,
III) at least one graft rubber polymer obtained by emulsion polymerization of styrene and acrylonitrile in the weight ratio 95:5 to 50:50, wherein styrene and/or acrylonitrile may be wholly or partly replaced by α-methylstyrene, methyl methacrylate or N-phenylmaleimide or mixtures thereof, in the presence of a butadiene polymer latex (C) having an average particle diameter of 10 - 220 nm and
IV) at least one rubber-free copolymer of styrene and acrylonitrile in the weight ratio 95:5 to 50:50, wherein styrene and/or acrylonitrile may be wholly or partly replaced by α-methylstyrene, methyl methacrylate or N-phenylmaleimide or mixtures thereof,
**characterized in that** the butadiene polymer latices (A) and (B) were obtained by seeded polymerization using at least one butadiene polymer latex (C) having an average particle diameter of 10 to 220 nm as seed latex and the grafted rubber component III) was obtained by graft polymerization in the presence of at least one butadiene polymer latex (C) used as a seed latex for (A) and (B).

2. Polymer compositions according to claim 1 containing
I) at least one graft rubber polymer obtained by emulsion polymerization of styrene and acrylonitrile in the weight ratio 95:5 to 50:50, wherein styrene and/or acrylonitrile may be wholly or partly replaced by α-methylstyrene, methyl methacrylate or N-phenylmaleimide or mixtures thereof, in the presence of a butadiene polymer latex (A) having an average particle diameter d₅₀ from 240 to 320 nm,
II) at least one graft rubber polymer obtained by emulsion polymerization of styrene and acrylonitrile in the weight ratio 95:5 to 50:50, wherein styrene and/or acrylonitrile may be wholly or partly replaced by α-methylstyrene, methyl methacrylate or N-phenylmaleimide or mixtures thereof, in the presence of a butadiene polymer latex (B) having an average particle diameter d₅₀ from 350 to 470 nm,
III) at least one graft rubber polymer obtained by emulsion polymerization of styrene and acrylonitrile in the weight ratio 95:5 to 50:50, wherein styrene and/or acrylonitrile may be wholly or partly replaced by α-methylstyrene, methyl methacrylate or N-phenylmaleimide or mixtures thereof, in the presence of a butadiene polymer latex (C) and
IV) at least one rubber-free copolymer of styrene and acrylonitrile in the weight ratio 95:5 to 50:50, wherein styrene and/or acrylonitrile may be wholly or partly replaced by α-methylstyrene, methyl methacrylate or N-phenylmaleimide or mixtures thereof,
**characterized in that** the butadiene polymer latices (A) and (B) were obtained by seeded polymerization using at least one butadiene polymer latex (C) having an average particle diameter of 20 to 210 nm as seed latex and the grafted rubber component III) was obtained by graft polymerization in the presence of at least one butadiene polymer latex (C) used as a seed latex for (A) and (B).

3. Polymer compositions according to claims 1 and 2 containing additionally at least one resin selected from aromatic polycarbonate, aromatic polyester carbonate, polyester, polyamide or mixtures thereof.

4. Polymer compositions according to claims 1 to 3, **characterized in that** in the production of the graft rubber polymers, the addition of the monomer is carried out in such a way that within the first half of the total monomer addition time 55 to 90 % by weight of the total monomer used in the graft polymerization is added and the remaining monomer fraction is added within the second half of the total monomer addition time.

5. polymer compositions according to Claims 1 to 3, **characterized in that** in the production of graft rubber polymers, the temperature difference between the beginning and end of the grafting reaction is at least 15°C.

6. Process for the manufacture of the polymer compositions according to claims 1 to 5, wherein the butadiene polymer latices (A) and (B) are obtained by seeded polymerization using at least one butadiene polymer latex (C) having an average particle diameter of 10 to 220 nm as seed latex and the graft rubber component III) is obtained by graft polymerization in the presence of at least one butadiene polymer latex (C) used as a seed latex for (A) and (B).

7. Process for the manufacture of polymer compositions according to caims 1 to 3, **characterized in that** components I), II), III) and IV) are mixed and compounded and extruded at elevated temperature.

8. Use of the polymer compositions according to claims 1 to 5 for the production of molded parts.

9. Molded parts obtainable from polymer compositions according to claims 1 to 5.

## Revendications

1. Compositions polymères contenant :
I) au moins un polymère de caoutchouc greffé obtenu par moyen d'une polymérisation en émulsion de styrène et d'acrylonitrile dans un rapport pondéral compris entre 95 :5 et 50 :50, le styrène et/ou l'acrylonitrile pouvant être complètement ou partiellement remplacé par l'α-méthylstyrène, le méthacrylate de méthyle ou le N-phénylmaléinimide ou des mélanges de ceux-ci, en présence d'un latex de polymère de butadiène (A) comprenant un diamètre moyen de particule d₅₀ compris entre 230 et 330 nm,
II) au moins un polymère de caoutchouc greffé obtenu par moyen d'une polymérisation en émulsion de styrène et d'acrylonitrile dans un rapport pondéral compris entre 95 :5 et 50 :50, le styrène et/ou l'acrylonitrile pouvant être complètement ou partiellement remplacé par l'α-méthylstyrène, le méthacrylate de méthyle ou le N-phénylmaléinimide ou des mélanges de ceux-ci, en présence d'un latex de polymère de butadiène (B) comprenant un diamètre moyen de particule dso compris entre 340 et 480 nm,
III) au moins un polymère de caoutchouc greffé obtenu par moyen d'une polymérisation en émulsion de styrène et d'acrylonitrile dans un rapport pondéral compris entre 95 :5 et 50 :50, le styrène et/ou l'acrylonitrile pouvant être complètement ou partiellement remplacé par l'α-méthylstyrène, le méthacrylate de méthyle ou le N-phénylmaléinimide ou des mélanges de ceux-ci, en présence d'un latex de polymère de butadiène (C) comprenant un diamètre moyen de particule compris entre 10 et 220 nm et
IV) au moins un copolymère dépourvu de caoutchouc greffé en styrène et en acrylonitrile dans un rapport pondéral compris entre 95 :5 et 50 :50, le styrène et/ou l'acrylonitrile pouvant être complètement ou partiellement remplacé par l'α-méthylstyrène, le méthacrylate de méthyle ou le N-phénylmaléinimide ou des mélanges de ceux-ci, **caractérisées en ce que** les latex de polymère de butadiène (A) et (B) sont obtenus par moyen de la polymérisation d'ensemencement en utilisant au moins un latex de polymère de butadiène (C) comprenant un diamètre moyen de particule compris entre 10 et 220 nm comme latex d'ensemencement et la composante de caoutchouc greffé III) est obtenue par moyen de la polymérisation de greffage en présence d'au moins un latex de polymère de butadiène (C) utilisé comme latex d'ensemencement pour au moins l'un de (A) et de (B).

2. Compositions polymères selon la revendication 1, comprenant
I) au moins un polymère de caoutchouc greffé obtenu par moyen d'une polymérisation en émulsion de styrène et d'acrylonitrile dans le rapport pondéral compris entre 95 :5 et 50 :50, le styrène et/ou l'acrylonitrile pouvant être complètement ou partiellement remplacé par l'α-méthylstyrène, le méthacrylate de méthyle ou le N-phénylmaléinimide ou des mélanges de ceux-ci, en présence d'un latex de polymère de butadiène (A) comprenant un diamètre moyen de particule d₅₀ compris entre 240 et 320 nm,
II) au moins un polymère de caoutchouc greffé obtenu par moyen d'une polymérisation en émulsion de styrène et d'acrylonitrile dans le rapport pondéral compris entre 95 :5 et 50 :50, le styrène et/ou l'acrylonitrile pouvant être complètement ou partiellement remplacé par l'a-méthylstyrène, le méthacrylate de méthyle ou le N-phénylmaléinimide ou des mélanges de ceux-ci, en présence d'un latex de polymère de butadiène (B) comprenant un diamètre moyen de particule d₅₀ compris entre 350 et 470 nm,
III) au moins un polymère de caoutchouc greffé obtenu par moyen d'une polymérisation en émulsion de styrène et d'acrylonitrile dans le rapport pondéral compris entre 95 :5 et 50 :50, le styrène et/ou l'acrylonitrile pouvant être complètement ou partiellement remplacé par l'α-méthylstyrène, le méthacrylate de méthyle ou le N-phénylmaléinimide ou des mélanges de ceux-ci, en présence d'un latex de polymère de butadiène (C) et
IV) au moins un copolymère dépourvu de caoutchouc greffé en styrène et en acrylonitrile dans le rapport pondéral compris entre 95 :5 et 50 :50, le styrène et/ou l'acrylonitrile pouvant être complètement ou partiellement remplacé par l'α-méthylstyrène, le méthacrylate de méthyle ou le N-phénylmaléinimide ou des mélanges de ceux-ci,
**caractérisées en ce que** les latex de polymère de butadiène (A) et (B) sont obtenus par moyen de la polymérisation d'ensemencement en utilisant au moins un latex de polymère de butadiène (C) comprenant un diamètre moyen de particule compris entre 20 et 210 nm comme latex d'ensemencement et la composante de caoutchouc greffé III) est obtenue par moyen de la polymérisation de greffage en présence d'au moins un latex de polymère de butadiène (C) utilisé comme latex d'ensemencement pour au moins l'un de (A) et de (B).

3. Compositions polymères selon les revendications 1 et 2, comprenant supplémentairement au moins une résine sélectionnée parmi le polycarbonate aromatique, le polyester-carbonate aromatique, le polyester, le polyamide ou des mélanges de ceux-ci.

4. Compositions polymères selon les revendications 1 à 3, **caractérisées en ce que** pour la production des polymères de caoutchouc greffé on effectue l'alimentation en monomères de sorte que pendant la première moitié de la durée totale de dosage de monomères 55 à 90 % en poids de la totalité de monomères à utiliser pour la polymérisation greffée sont ajoutés et la partie restante de monomères est ajoutée par dosage pendant la deuxième moitié de la durée totale de dosage de monomères.

5. Compositions polymères selon les revendications 1 à 3, **caractérisées en ce que** pour la production des polymères de caoutchouc greffé la différence de température entre la température au début de la réaction de greffage et celle à la fin de la réaction de greffage est au moins 15°C.

6. Procédé de production de compositions polymères selon les revendications 1 à 5, dans lequel les latex de polymère de butadiène (A) et (B) sont obtenus par moyen de la polymérisation d'ensemencement en utilisant au moins un latex de polymère de butadiène (C) comprenant un diamètre moyen de particule compris entre 10 et 220 nm comme latex d'ensemencement et la composante de caoutchouc greffé III) est obtenue par moyen de la polymérisation de greffage en présence d'au moins un latex de polymère de butadiène (C) utilisé comme latex d'ensemencement pour au moins l'un de (A) et de (B).

7. Procédé de production de compositions polymères selon les revendications 1 à 3, **caractérisé en ce qu'**on mélange les composantes I), II), III) et IV) et on les combine et extrude à une température élevée.

8. Utilisation des compositions polymères selon les revendications 1 à 5 pour fabriquer des pièces moulées.

9. Pièces moulées pouvant être obtenues à partir des compositions polymères selon les revendications 1 à 5.
